# EUROPEAN PATENT SPECIFICATION

(11) **EP 2 295 950 B1**
(45) Date of publication and mention of the grant of the patent: **29.05.2013**
(21) Application number: 09425346.5
(22) Date of filing: 09.09.2009
(51) Int. Cl.: G01M 15/09, G01M 15/02, G01M 15/04

(54) **Apparatus and method for altimetric conditioning of internal-combustion engines**
Vorrichtung und Verfahren zur altimetrischen Konditionierung von Verbrennungsmotoren
Dispositif et procédé de conditionnement altimétrique de moteurs à combustion interne

(43) Date of publication of application: 16.03.2011
(73) Proprietor: Control Sistem S.r.l., 10121 Torino (IT)
(72) Inventor: Testa, Daniele c/o Control Sistem S.r.l., 10044 Pianezza (Torino) (IT)
(74) Representative: Marchitelli, Mauro

(56) References cited:
- WO-A1-02/42630
- WO-A2-02/42730
- WO-A2-2008/036993

## Description

### Field of the invention

The present invention relates to an apparatus and a method for altimetric conditioning of the intake and of the exhaust of internal-combustion engines.

Altimetric-conditioning apparatuses are used for simulating conditions of operation of engines of vehicles at different altitudes. The purpose of said apparatuses is to create in a testing environment conditions of operation of the engine substantially identical to the real conditions of operation at the desired altitudes.

### Description of the known art

The document No. WO2008/036993 or WO 02/42630 describes an apparatus for altimetric conditioning of internal-combustion engines, comprising an intake duct and an exhaust duct designed to be connected to the intake and to the exhaust of the engine being tested. The exhaust duct is connected to a blower that draws gas from the exhaust duct and sends it to the external environment. The intake duct is connected to a conditioning unit equipped with a fan. The pressure in the intake duct and in the exhaust duct is controlled by means of electronically controlled throttle valves.

In the known solution the regulation of the testing pressure is performed by varying the position of the regulation valves, which effect a throttling of the section of passage of the flow of air.

A drawback of this solution is the difficulty of maintaining the testing pressure in a stable way during the transients of operation of the engine (acceleration or deceleration). Furthermore, the throttling of the section of passage of the flow of gas creates head losses that lead to energy dispersion.

### Object and summary of the invention

The object of the present invention is to provide an apparatus and a method for altimetric conditioning that will enable the drawbacks of the known art to be overcome.

According to the present invention, said object is achieved by an apparatus and by a method for altimetric conditioning that present the characteristics forming the subject of Claims 1 and 8.

The present invention envisages defining a single controlled-pressure volume in which the testing pressure is maintained and to which an intake duct and an exhaust duct are connected. The controlled-pressure volume is connected to a first volumetric blower and to a second volumetric blower. A control unit is provided for varying the speed of rotation of the first volumetric blower and/or of the second volumetric blower so as to maintain the desired testing pressure in the controlled-pressure volume.

The desired pressure within the controlled-pressure volume is obtained by changing the relative speed of the two volumetric blowers. The testing pressure can be varied in a continuous and regular way from a minimum pressure, for example in the region of 650 mbar, to a maximum pressure, for example in the region of 1100 mbar.

The stability of the pressure within the controlled-pressure volume is obtained by controlling the speed of the blowers, so that the reaction time of the system is extremely short. On average, the reaction time is estimated to be in the region of 0.5 s.

By changing the speed of the blowers in a synchronous way it is possible to control the total flow and hence adapt it to the type of engine being tested. When the engines to be tested are small, it is possible to reduce the flow of the system and, consequently, the power employed.

Given that the pressure generated in the controlled-pressure volume is different from the ambient pressure, one of the two volumetric blowers operates in driven mode. Hence, via a regenerative driver, it is possible to recover from the driven blower part of the energy absorbed by the powered blower. This minimizes the power necessary for maintaining the desired testing pressure in the controlled-pressure volume.

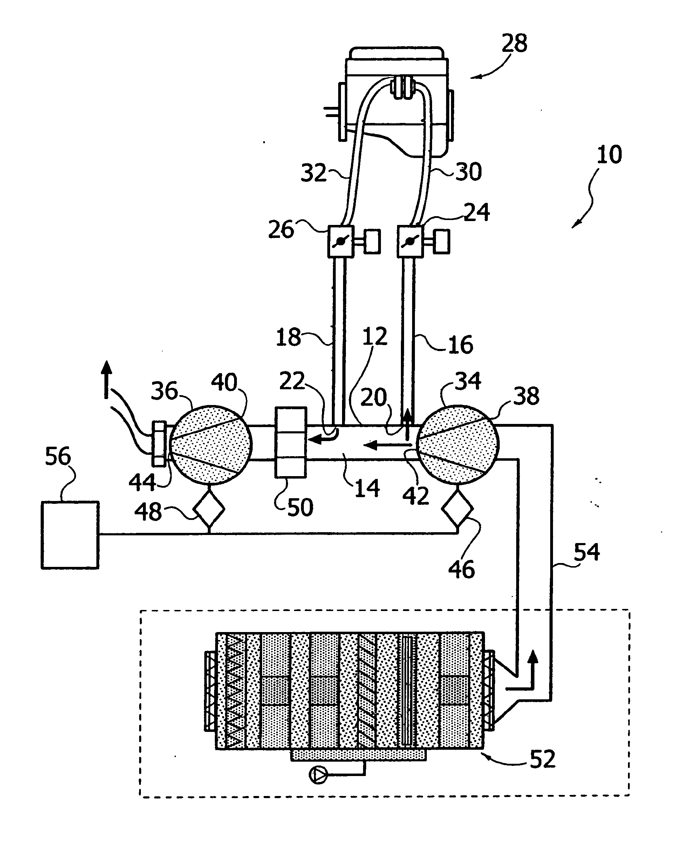

### Brief description of the drawing

Further characteristics and advantages of the present invention will emerge clearly in the course of the ensuing detailed description, which is provided purely by way of non-limiting example with reference to the attached drawing, which illustrates a diagram of an apparatus for altimetric conditioning according to the present invention.

### Detailed description of the preferred embodiment

With reference to the attached drawing, designated by 10 is an apparatus for altimetric conditioning according to the present invention. The apparatus 10 comprises a chamber 12 defining a controlled-pressure volume 14 isolated from the external environment. An intake duct 16 and an exhaust duct 18 extend from the chamber 12. The intake duct 16 and the exhaust duct 18 have respective first ends 20, 22 in communication with the controlled-pressure volume 14. The second ends of the intake and exhaust ducts 16, 18 are connected to respective valves 24, 26.

The reference number 28 designates an internal-combustion engine being tested. The engine 28 has an intake manifold 30 connected to the valve 24 and an exhaust manifold 32 connected to the valve 26. The valves 24, 26 simulate the pressure drops due to the air filter and to the catalytic converter of the engine.

The apparatus for altimetric conditioning 10 comprises a first volumetric blower 34 and a second volumetric blower 36, which have respective intake sections 38, 40 and respective delivery sections 42, 44. The chamber 12 that defines the controlled-pressure volume 14 extends between the delivery section 42 of the first blower 34 and the intake section 40 of the second volumetric blower 36.

The volumetric blowers 34, 36 are preferably positive-displacement rotary-lobe blowers of a Roots type, driven by a.c. electric motors governed by inverters 46, 48. An electronic control unit 56 is provided for controlling, via the inverters 46, 48, the electric motors that drive the first and second volumetric blowers 34, 36.

The intake section 38 of the first volumetric blower 34 draws a first flow of gas from outside the controlled-pressure volume 14. The delivery section 42 of the first volumetric blower 34 sends the first flow of gas into the volume 14. The intake section 40 of the second volumetric blower 36 draws a second flow of gas from the volume 14, and the delivery section 44 of the second volumetric blower 36 sends the second flow of gas into the external environment. Preferably, a heat exchanger 50 is set between the intake section 40 of the second volumetric blower 36 and the controlled-pressure volume 14 in order to reduce the temperature of the gas prior to inlet into the second blower 36.

Optionally, there may be provided an air-conditioning unit 52 connected by means of a duct 54 to the intake section 38 of the first volumetric blower 34. If present, the air-conditioning unit 52 enables the conditions of temperature and humidity of the flow of air introduced into the controlled-pressure volume 14 to be set at desired values. For example, the air-conditioning unit 52 enables variation of the temperature of intake of the air from +10 to +50 C° and the relative humidity of the air from 20% to 80%. The conditioning of the entire flow of air before this is introduced into the controlled-pressure volume 14 enables elimination of problems of stability of the temperature and of humidity during the transients of the engine.

In a possible variant of the present invention, in the case where the air-conditioning unit 52 is provided, two blowers could be envisaged at the inlet to the chamber 14: a first blower with lower flow rate with the intake section connected to the duct 54 coming from the air-conditioning unit 52 and a second blower with higher flow rate, which draws in non-conditioned air. In this case, the delivery section of the first blower would be oriented towards the end 20 of the intake duct, to cause the engine to draw in conditioned air. This variant would be more efficient from the energy standpoint in so far as it reduces the flow rate of air to be conditioned.

The volumetric blowers 34, 36 generate respective flows of air with flow rates uniquely correlated to the speed of rotation of the blowers 34, 36. The two blowers 34, 36 are preferably identical to one another. Consequently, if the blowers 34, 36 are driven in rotation at the same speed, the pressure in the volume 14, with the engine 28 turned off, will be identical to the ambient pressure.

By varying the relative speed of the blowers 34, 36, the flow rates of the first and second flows of air become different from one another. Consequently, the pressure within the controlled-pressure volume 14 increases or decreases with respect to the ambient pressure. In particular, the pressure in the volume 14 increases with respect to the ambient pressure if the first flow has a flow rate higher than the second flow, and the pressure in the volume 14 decreases if the rate of the second flow is higher than the rate of the first flow.

By varying the relative speed of the blowers 34, 36, it is hence possible to vary continuously the pressure in the volume 14 from a minimum value, for example in the region of 650 mbar (corresponding to an altitude of approximately 3500 m above sea level) to a maximum pressure, for example in the region of 1100 mbar.

The desired testing pressure is generated in a single volume 14, from which the engine draws the flow of intake air and in which it introduces the flow of exhaust gases.

The controlled-pressure volume 14 is sized so as to maintain the variations of pressure within a pre-set tolerance during the transients of operation of the engine, for example in the region of ±10 mbar.

Given that the engine draws in air from and sends exhaust gases into the same volume 14, the variation of the mass within the volume 14, in the case of aspirated engines, is only due to the variation of the flow rate of fuel and to the fact that the temperature of the gas at inlet into the volume 14 is higher than the temperature of the air drawn from said volume. In turbo-supercharged engines, given that the supercharging pressure varies, in addition to the effects described above there is also a variation of the mass of air contained in the engine that is equivalent to the volume of the ducts, of the heat exchangers, and of the manifolds situated between the compressor and the turbine. For large turbo-supercharged engines, it is assumed that the total volume between the compressor and the turbine is approximately 50 1, with a variation of pressure of 1.5 bar.

The maximum variation of the flow of fuel is estimated to be in the region of 100 kg/h, corresponding to 28 g/s. The maximum variation in the flow rate of air at inlet and at outlet is estimated to be approximately 75 1, corresponding to 90 g.

Assuming that the maximum variation of the flow rate of fuel is produced in one second, the variation of mass is -62 g during acceleration and +62 g during deceleration of the engine. Hence, to ensure that the variation of pressure in the controlled-pressure volume 14 remains below a pre-set tolerance value of 10 mbar, it is necessary for the volume 14 to measure approximately 6.2 m³. The control system is able to stabilize the pressure at the desired value in approximately two seconds.

During operation, one of the two volumetric blowers 34, 36 is driven at a constant speed and the other is driven at a variable speed for maintaining the desired pressure in the controlled-pressure volume 14 during the transients of the engine 28.

During operation, when the pressure in the volume 14 is less than the ambient pressure, the first volumetric blower 34 operates in driven mode. When instead the pressure in the controlled-pressure volume 14 is higher than the ambient pressure, the second volumetric blower 36 operates in driven mode. Consequently, via the inverter 46, 48 of the volumetric blower 34 or 36 that operates in driven mode, it is possible to recover a part of the electrical energy absorbed by the volumetric blower 34 or 36 that operates in supplied mode. The energy recovery from the blower that operates in driven mode enables improvement of the energy efficiency of the apparatus.

## Claims

1. An apparatus for altimetric conditioning of the intake and the exhaust of internal-combustion engines, comprising:
- a controlled-pressure volume (14) isolated from the external environment;
- an intake duct (16) and an exhaust duct (18) in communication with said controlled-pressure volume (14);
- at least one first volumetric blower (34) and one second volumetric blower (36), each of which has an intake section (38, 40) and a delivery section (42, 44), wherein the intake section (38) of the first volumetric blower (34) is adapted to draw a first flow of gas from the external environment and the delivery section (42) of the first volumetric blower (38) is adapted to send said first flow of gas into said controlled-pressure volume (14) and wherein the intake section (40) of the second volumetric blower (36) is adapted to draw a second flow of gas from said controlled-pressure volume (14) and the delivery section (44) of the second volumetric blower (36) is adapted to send said second flow of gas towards the external environment; and
- a control unit (56), provided for varying the speed of operation of the first volumetric blower (34) and/or of the second volumetric blower (36) for maintaining a desired testing pressure in said controlled-pressure volume (14),
**characterized in that** the controlled-pressure volume (14) is sized so as to maintain the variations of pressure within ±10 mbar during the transients of operation of the engine.

2. The apparatus according to Claim 1, wherein said first and second volumetric blowers (34, 36) are identical to one another.

3. The apparatus according to Claim 1 or Claim 2, **characterized in that** said first volumetric blower (34) and said second volumetric blower (36) are constituted by rotary-lobe blowers of a Roots type.

4. The apparatus according to any one of the preceding claims, wherein said first and second volumetric blowers (34, 36) are driven by respective a.c. electric motors driven via inverters (46, 48).

5. The apparatus according to any one of the preceding claims, wherein said controlled-pressure volume (14) is defined by a chamber (12) that extends between the delivery section (42) of the first blower (34) and the intake section (40) of the second volumetric blower (36).

6. The apparatus according to Claim 5, wherein said intake duct (16) and said exhaust duct (18) have respective ends (20, 22) in communication with the internal volume (14) of said chamber (12).

7. The apparatus according to Claim 1, comprising an air-conditioning unit (52) connected by means of a duct (54) to the intake section (38) of the first volumetric blower (34).

8. A method for altimetric conditioning of the intake and of the exhaust of internal-combustion engines, comprising:
- defining a controlled-pressure volume (14) isolated from the external environment;
- connecting intake and exhaust manifolds (30, 32) of the internal-combustion engine (28) to said controlled-pressure volume (14);
- generating a first flow of gas from the external environment towards said controlled-pressure volume (14) by means of at least one first volumetric blower (34) and a second flow of gas from said controlled-pressure volume (14) towards the external environment by means of at least one second volumetric blower (36); and
- controlling the rate of the first flow of air and of the second flow of air to maintain a desired testing pressure in said controlled-pressure volume (14),
**characterized in that** the controlled-pressure volume (14) is sized so as to maintain the variations of pressure within ±10 mbar during the transients of operation of the engine.

9. The method according to Claim 8, wherein said first flow of gas and said second flow of gas are generated by a first volumetric blower (34) and by a second volumetric blower (36).

10. The method according to Claim 9, wherein the rate of the first flow of gas and the rate of the second flow of gas are determined by controlling the speed of rotation of the first volumetric blower (34) and of the second volumetric blower (34).

## Patentansprüche

1. Vorrichtung zum altimetrischen Konditionieren der Ansaugung und der Abgabe von Brennkraftmaschinen, die folgendes aufweist:
ein Steuerdruckvolumen (14), das von dem externen Umfeld isoliert ist;
einen Einlasskanal (16) und einen Auslasskanal (18) in Verbindung mit dem Steuerdruckvolumen (14);
wenigstens ein erstes volumetrisches Gebläse (34) und ein zweites volumetrisches Gebläse (36), von denen jedes einen Einlassabschnitt (38, 40) und einen Zufuhrabschnitt (42, 44) aufweist, wobei der Einlassabschnitt (38) des ersten volumetrischen Gebläses (34) angepasst ist, um eine erste Gasströmung von dem externen Umfeld anzusaugen, und der Zufuhrabschnitt (42) des ersten volumetrischen Gebläses (38) angepasst ist, um die erste Gasströmung in das Steuerdruckvolumen (14) zu schicken, und wobei der Einlassabschnitt (40) des zweiten volumetrischen Gebläses (36) angepasst ist, um eine zweite Gasströmung von dem Steuerdruckvolumen (14) anzusaugen, und der Zufuhrabschnitt (44) des zweiten volumetrischen Gebläses (36) angepasst ist, um die zweite Gasströmung zu dem externen Umfeld zu schicken; und
eine Steuereinheit (56), die zum Variieren der Betriebsgeschwindigkeit des ersten volumetrischen Gebläses (34) und/oder des zweiten volumetrischen Gebläses (36) vorgesehen ist, zum Beibehalten eines gewünschten Testdrucks in dem Steuerdruckvolumen (14),
**dadurch gekennzeichnet, dass**
das Steuerdruckvolumen (14) bemessen ist, um die Variationen eines Drucks innerhalb von ±10 mbar während den Betriebsübergängen der Maschine beizubehalten.

2. Vorrichtung nach Anspruch 1, wobei das erste und das zweite volumetrische Gebläse (34, 36) identisch zueinander sind.

3. Vorrichtung nach Anspruch 1 oder Anspruch 2,
**dadurch gekennzeichnet, dass**
das erste volumetrische Gebläse (34) und das zweite volumetrische Gebläse (36) durch Drehkolbengebläse der Roots-Art gebildet sind.

4. Vorrichtung nach einem der vorangehenden Ansprüche, wobei das erste und das zweite volumetrische Gebläse (34, 36) durch entsprechende Drehstromelektromotoren angetrieben werden, welche über Inverter (46, 48) angetrieben werden.

5. Vorrichtung nach einem der vorangehenden Ansprüche, wobei das Steuerdruckvolumen (14) durch eine Kammer (12) festgelegt ist, die sich zwischen den Zufuhrabschnitten (42) des ersten Gebläses (34) und dem Einlassabschnitt (40) des zweiten volumetrischen Gebläses (36) erstreckt.

6. Vorrichtung nach Anspruch 5, wobei der Einlasskanal (16) und der Auslasskanal (18) jeweilige Enden (20, 22) in Verbindung mit dem internen Volumen (14) der Kammer (12) haben.

7. Vorrichtung nach Anspruch 1, die eine Klimatisierungseinheit (52) aufweist, die mittels eines Kanals (54) mit dem Einlassabschnitt (38) des ersten volumetrischen Gebläses (34) verbunden ist.

8. Verfahren zum altimetrischen Konditionieren der Ansaugung und der Abgabe von Brennkraftmaschinen, das folgendes aufweist:
Definieren eines Steuerdruckvolumens (14), das von dem externen Umfeld isoliert ist;
Verbinden von Einlass- und Auslasskrümmer (30, 32) der Brennkraftmaschinen (28) mit dem Steuerdruckvolumen (14);
Erzeugen einer ersten Gasströmung von dem externen Umfeld zu dem Steuerdruckvolumen (14) mittels wenigstens einem ersten volumetrischen Gebläse (34) und einer zweiten Gasströmung von dem Steuerdruckvolumen (14) zu dem externen Umfeld mittels wenigstens einem zweiten volumetrischen Gebläse (36); und
Steuern der Rate der ersten Luftströmung und der zweiten Luftströmung, um einen gewünschten Testdruck bzw. Prüfdruck in dem Steuerdruckvolumen (14) beizubehalten,
**dadurch gekennzeichnet, dass**
das Steuerdruckvolumen (14) bemessen ist, um die Druckveränderungen innerhalb von ±10 mbar während den Betriebsübergängen der Maschine beizubehalten.

9. Verfahren nach Anspruch 8, wobei die erste Gasströmung und die zweite Gasströmung durch ein erstes volumetrisches Gebläse (34) und ein zweites volumetrisches Gebläse (36) erzeugt werden.

10. Verfahren nach Anspruch 9, wobei die Rate der ersten Gasströmung und die Rate der zweiten Gasströmung durch ein Steuern der Drehgeschwindigkeit des ersten volumetrischen Gebläses (34) und des zweiten volumetrischen Gebläses (36) bestimmt werden.

## Revendications

1. Appareil pour le conditionnement altimétrique de l'admission et de l'échappement des moteurs à combustion interne, comprenant :
un volume de pression contrôlée (14) isolé de l'environnement extérieur ;
un conduit d'admission (16) et un conduit d'échappement (18) en communication avec ledit volume de pression contrôlée (14) ;
au moins une première soufflante volumétrique (34) et une seconde soufflante volumétrique (36), dont chacune a une section d'admission (38, 40) et une section de distribution (42, 44), dans lequel la section d'admission (38) de la première soufflante volumétrique (34) est adaptée pour aspirer un premier flux de gaz provenant de l'environnement extérieur et la section de distribution (42) de la première soufflante volumétrique (38) est adaptée pour envoyer ledit premier flux de gaz dans ledit volume de pression contrôlée (14) et dans lequel la section d'admission (40) de la seconde soufflante volumétrique (36) est adaptée pour aspirer un second flux de gaz provenant dudit volume de pression contrôlée (14) et la section de distribution (44) de la seconde soufflante volumétrique (36) est adaptée pour envoyer ledit second flux de gaz vers l'environnement extérieur ; et
une unité de commande (56), prévue pour modifier la vitesse de fonctionnement de la première soufflante volumétrique (34) et/ou de la seconde soufflante volumétrique (36) pour maintenir une pression d'essai souhaitée dans ledit volume de pression contrôlée (14),
**caractérisé en ce que** le volume de pression contrôlée (14) est dimensionné afin de maintenir les variations de pression dans une plage de ±10 mbar pendant les transitions de fonctionnement du moteur.

2. Appareil selon la revendication 1, dans lequel lesdites première et seconde soufflantes volumétriques (34, 36) sont identiques entre elles.

3. Appareil selon la revendication 1 ou la revendication 2, **caractérisé en ce que** ladite première soufflante volumétrique (34) et ladite seconde soufflante volumétrique (36) sont constituées par des soufflantes à lobe rotatif du type Roots.

4. Appareil selon l'une quelconque des revendications précédentes dans lequel lesdites première et seconde soufflantes volumétriques (34, 36) sont entraînées par des moteurs électriques à courant alternatif respectifs entraînés via des inverseurs (46, 48).

5. Appareil selon l'une quelconque des revendications précédentes, dans lequel ledit volume de pression contrôlée (14) est défini par une chambre (12) qui s'étend entre la section de distribution (42) de la première soufflante (34) et la section d'admission (40) de la seconde soufflante volumétrique (36).

6. Appareil selon la revendication 5, dans lequel ledit conduit d'admission (16) et ledit conduit d'échappement (18) ont des extrémités (20, 22) respectives en communication avec le volume interne (14) de ladite chambre (12).

7. Appareil selon la revendication 1, comprenant une unité de conditionnement d'air (52) raccordée au moyen d'un conduit (54) à la section d'admission (38) de la première soufflante volumétrique (34).

8. Procédé pour le conditionnement altimétrique de l'admission et de l'échappement de moteurs à combustion interne, comprenant des étapes consistant à:
définir un volume de pression contrôlée (14) isolé de l'environnement extérieur ;
raccorder des collecteurs d'admission et d'échappement (30, 32) du moteur à combustion interne (28) audit volume de pression contrôlée (14) ;
générer un premier flux de gaz de l'environnement extérieur vers ledit volume de pression contrôlée (14) au moyen d'au moins une première soufflante volumétrique (34) et un second flux de gaz dudit volume de pression contrôlée (14) vers l'environnement extérieur au moyen d'au moins une seconde soufflante volumétrique (36) ; et
contrôler la vitesse du premier flux d'air et du second flux d'air pour maintenir une pression d'essai souhaitée dans ledit volume de pression contrôlée (14),
**caractérisé en ce que** le volume de pression contrôlée (14) est dimensionné afin de maintenir les variations de pression dans une plage de ±10 mbar pendant les transitions de fonctionnement du moteur.

9. Procédé selon la revendication 8, dans lequel ledit premier flux de gaz et ledit second flux de gaz sont générés par une première soufflante volumétrique (34) et par une seconde soufflante volumétrique (36).

10. Procédé selon la revendication 9, dans lequel la vitesse du premier flux de gaz et la vitesse du second flux de gaz sont déterminées en contrôlant la vitesse de rotation de la première soufflante volumétrique (34) et de la seconde soufflante volumétrique (36).
